# EUROPÄISCHE PATENTSCHRIFT

(11) **EP 3 618 311 B1**
(45) Veröffentlichungstag und Bekanntmachung des Hinweises auf die Patenterteilung: **13.01.2021**
(21) Anmeldenummer: 19193611.1
(22) Anmeldetag: 26.08.2019
(51) Int. Cl.: B60Q 1/14, H04L 9/32, H04B 10/116

(54) **VERFAHREN ZUM DATENAUSTAUSCH ZWISCHEN EINEM FAHRZEUG UND EINER INFRASTRUKTUR ODER EINEM WEITEREN FAHRZEUG**
METHOD FOR EXCHANGING DATA BETWEEN A VEHICLE AND AN INFRASTRUCTURE OR ANOTHER VEHICLE
PROCÉDÉ D'ÉCHANGE DE DONNÉES ENTRE UN VÉHICULE ET UNE INFRASTRUCTURE OU UN AUTRE VÉHICULE

(30) Priorität: 30.08.2018 DE 102018214735
(43) Veröffentlichungstag der Anmeldung: 04.03.2020
(73) Patentinhaber: Ford Global Technologies, LLC, Dearborn, MI 48126 (US)
(72) Erfinder: Stefan, Frederic, 52072 Aachen (DE); Arndt, Christoph, 57583 Moerlen (DE); Gussen, Uwe, 52393 Hürtgenwald (DE)
(74) Vertreter: Markowitz, Markus

(56) Entgegenhaltungen:
- EP-A1- 2 894 829
- US-A1- 2014 302 774
- US-A1- 2016 065 306

## Beschreibung

Die Erfindung betrifft ein Verfahren zum Datenaustausch zwischen einem Fahrzeug und einer Infrastruktur oder einem weiteren Fahrzeug nach Anspruch 1.

Mit Car-to-Car Communication (Car2Car oder C2C) - im englischen Sprachraum unter Vehicle-to-Vehicle (V2V) geläufig - bezeichnet man den Austausch von Informationen und Daten zwischen Kraftfahrzeugen mit dem Hintergrund, dem Fahrer frühzeitig kritische und gefährliche Situationen zu melden. Hierzu gibt es verschiedene Projekte in Europa, die letztlich alle die Erhöhung der Sicherheit im Verkehr sowie die Optimierung des Verkehrsflusses anstreben. Car2Car ist ein Spezialfall von Car2X, der Kommunikation von Fahrzeugen mit ihrer Umgebung (neben anderen Verkehrsteilnehmern insbesondere der Infrastruktur).

Teilweise oder vollständig automatisierte Fahrzeuge (AV-Fahrzeuge) müssen einen ständig wachsenden Datensatz mit ihrer Umgebung austauschen (andere Fahrzeuge, Fußgänger, Fahrräder, Infrastrukturen etc.). Die ausgetauschten Daten können für verschiedene Zwecke verwendet werden, wie z.B. den Austausch von Statusinformationen (Geschwindigkeit usw.) zwischen Fahrzeugen, um automatisiertes Fahren zu ermöglichen oder den Austausch von Authentifizierungsdaten, um eine Schranke, ein Garagentor, eine Autobahnzahleinrichtung usw. zu betätigen.

Generell sollte die Kommunikation des Autos mit seiner Umgebung über V2x-Kommunikation abgewickelt werden. V2X verwendet DSRC (Dedicated Short Rage Communication)-Geräte, die im 5,9 GHz-Band mit einer Reichweite von etwa 1000 m arbeiten.

In manchen Fällen kann es sinnvoll sein, ein Fahrzeug und/oder seinen Fahrer eindeutig zu authentifizieren, um V2X in Bezug auf Verschlüsselung und Man-in-the-Middle-Angriffe robust zu machen.

Zusätzlich kann die Authentifizierungsmethode für die Entwicklung einer intelligenten Mobilitätslösung mit automatisiertem Fahren unerlässlich werden, um einem AV-Fahrzeug zu ermöglichen, automatisch ein Ausfahrtstor einer Garage mit Parkgebühren zu öffnen oder automatisch Tore an einer Bezahlstelle auf der Autobahn zu öffnen oder einfach nur um der Infrastruktur zu ermöglichen, um zu erkennen, dass ein Auto berechtigt ist, bestimmte Aktionen durchzuführen (z.B. Prioritätsfahrzeuge, Polizei, Feuerwehr....). In manchen Fällen kann es auch sinnvoll sein, den Fahrer eines Fahrzeugs zu identifizieren, z.B. für Car-Sharing-Anwendungen.

Aus der US 2014/0099107 A1 ist es bekannt, für das menschliche Auge unsichtbar Licht von Fahrzeugen für die Übertragung von aufmodulierten Informationen, gegebenenfalls in verschlüsselter Form, zu nutzen, um den Benutzer oder das Fahrzeug zu identifizieren bzw. zu authentifizieren.

Um ein mutwilliges Verfälschen oder Manipulieren der ausgesendeten Informationen zu verhindern, ist es notwendig die Informationen zu kodieren und auch zu verschlüsseln.

Die US 2014/302774 A1 offenbart ein Verfahren zum Informationsaustausch innerhalb einer Gruppe von Fahrzeugen, bei dem die Information bei der Übertragung mittels eines individuellen Schlüssels verschlüsselt wird.

Die US 2016/065306 A1 zeigt ein Verfahren zum verschlüsselten Austausch von Daten zwischen einem Fahrzeug und einer Infrastruktur oder einem weiteren Fahrzeug unter Verwendung von Scheinwerferlicht des Fahrzeugs, wobei die Daten verschlüsselt und auf das Scheinwerferlicht aufmoduliert werden, um den Benutzer und/oder das Fahrzeug zu identifizieren, wobei der Schlüssel zur Verschlüsselung der Daten durch benutzergesteuerte Transformation erzeugt wird und wobei die benutzergesteuerte Transformation zur Erzeugung des Schlüssels aus einem manuellen Eintippen eines Codes durch den Benutzer besteht. Das manuelle Eintippen eines Codes ist aber-je nach Komplexität des Codes - nicht einfach und zudem fehlerbehaftet.

Hier setzt die vorliegende Erfindung an und setzt sich die Aufgabe, ein sicheres aber einfaches Verfahren zum Datenaustausch zwischen einem Fahrzeug und einer Infrastruktur oder einem weiteren Fahrzeug unter Verwendung von Licht bereitzustellen.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass wenn ein Verfahren zum verschlüsselten Austausch von Daten zwischen einem Fahrzeug und einer Infrastruktur oder einem weiteren Fahrzeug unter Verwendung von Scheinwerferlicht des Fahrzeugs ausgeführt wird, wobei die Daten verschlüsselt und auf das Scheinwerferlicht aufmoduliert werden, um den Benutzer und/oder das Fahrzeug zu identifizieren, wobei der Schlüssel zur Verschlüsselung der Daten durch benutzergesteuerte Transformation erzeugt wird, es auf einfache Weise möglich ist, eine besonders sichere Kommunikation bereitzustellen.

Besonders einfach und übersichtlich für die Benutzer ist ein solches Verfahren, die benutzergesteuerte Transformation eine Bild- oder Videotransformation umfasst.

Als besonders geeignet hat sich Matrix-Scheinwerferlicht herausgestellt, da es eine hohe Informationsdichte bei der Modulation zulässt. Insbesondere Matrix-LED- oder Matrix-Laser-Scheinwerferlicht sollten Verwendung finden.

Denkbar wäre auch der Einsatz weiterer Licht-Technologien wie Laser Matrix, OLED Beamer, FlexDisplay und Flüssiges Licht.

Der Schlüssel kann periodisch und/oder auf Anfrage mit der Infrastruktur oder dem weiteren Fahrzeug ausgetauscht werden, vorzugsweise im Handshake Verfahren.

Erfindungsgemäß kann eine visuelle Überprüfung des Schlüssels stattfinden.

Die ausgetauschten Daten können zusätzlich einen Identifizierungscode für das Fahrzeug und/oder den Benutzer und/oder einen Vorgang aufweisen.

Die benutzergesteuerte Transformation kann z.B. auf einem Touchdisplay stattfinden, indem der Benutzter auf diesem "malt" oder mit dem Finger Zufallsbewegungen ausführt. Diese könnten dann in einem Bild als Übertragungsmedium als "Pinselstriche" angezeigt werden und eine einfache visuelle Überprüfung erlauben.

Mit anderen Worten, es werden durch die vorliegende Erfindung eine visuelle Fahrzeugauthentifizierung mittels 2D/3D "Bildern" ermöglicht, die über die als Scheinwerfer verwendeten Fahrzeugscheinwerfer und insbesondere LED-Matrizen übertragen werden.

Das Funktionsprinzip besteht darin, dass der Fahrer ein 2D/3D-Bild oder eine Filmsignatur/Passwort mit einem speziellen Gerät im Fahrzeug definieren kann (HMI, Smartphone, SYNC, Entertainment usw.).

Hier würde eine Filmsignatur/Passwort bedeuten, dass der Fahrer eine Signatur/Passwort auf einer Folge von Bildern definieren würde.

Diese Signatur oder dieses Passwort kann in einen ersten Satz von Daten oder Bits umgewandelt werden (und als Schlüssel dienen), die die verschlüsselte Schlüsselversion der Signatur darstellen.

Dies kann eine komplexe Transformation des Bildes sein oder es kann einfach eine Matrix von "Bits" (oder eine Folge von Matrizen von Bits) sein, die der vom Fahrer/Benutzer definierten 2D/3D-Bildsignatur/Passwort entspricht.

Diese Signatur oder Schlüssel wird dann in einen Satz spezifischer (LED)-Scheinwerfer-Matrizen-Steuerbefehle umgewandelt, um ein 2D- oder 3D-Lichtmuster oder eine Folge von 2D- oder 3D-Lichtmustern zu erzeugen, die in Form eines Zeitmusters übertragen würden.

Die Steuerbefehle könnten beinhalten:
- die präzise Ansteuerung einer oder mehrerer Elemente der Matrix, z. B. LEDs der LED-Matrix;
- die Ansteuerung der (LED)-Intensität;
- die Ansteuerung der (LED)-Orientierung;
- die Ansteuerung der (LED)-Frequenz;
- die Auslösung eines Lichtpolarisationseffektes;

Mit anderen Worten, die Modulation der Daten auf das Scheinwerferlicht kann jegliche mögliche Variation des Lichts umfassen, insbesondere solche, die für das menschliche Auge unsichtbar sind.

In einer bevorzugten Ausführung soll die Modulation des Lichts (insbesondere der LED-Matrix) daher für das menschliche Auge weder sichtbar noch wahrnehmbar sein.

Die so erzeugte visuelle Signatur im Licht kann einmalig vom Fahrer zu Hause oder in den Fahrzeugen definiert und z.B. mit einem tragbaren Smartphone auf Fahrzeuge geladen werden. Das System kann eine regelmäßige Änderung der visuellen Signatur an den Fahrer verlangen.

Die visuelle Signatur kann dann vom Authentifizierungssystem auf unterschiedliche Weise verwendet werden, z.B. zum Datenaustausch zwischen Fahrzeug und Infrastruktur (V2I), als Datenverschlüsselungsschlüssel oder zum Austausch verschlüsselter Daten, zur V2I-Authentifizierung zur Aktivierung eines Vorgangs oder Dienstes oder auch als V2I Backup Datenkommunikation.

Das eigene Fahrzeug und die Infrastruktur oder weitere Fahrzeug umfasst jeweils bevorzugterweise einen Sensor, der den Empfang und die Dekodierung des Lichtsignals von Scheinwerfern anderer Fahrzeuge oder Infrastruktur ermöglicht.

Diese Sensoren können Detektoren, Kameras, Kamerasensoren, speziellen Doppel-LEDs, die in der Lage sind, Licht zu emittieren und zu senden, usw. umfassen. Zudem kann ein solcher Sensor auch in dem Scheinwerfer selbst integriert werden.

Solche Scheinwerfersensoren könnten zum Datenaustausch zwischen Fahrzeugen und/oder Infrastruktur eingesetzt werden, um einen V2I-Verschlüsselungsschlüssel oder ein V2I-Authentifizierungsmuster oder bestimmte redundante Daten zu empfangen.

Als Infrastruktur kommen alle Möglichkeiten in Betracht. So kann es sich z.B. Dienste für das Fahrzeug und/oder dessen Insassen handeln, z.B. Autobahnzahlung, Mautgebührenzahlung, Garagenöffnung, Drive-In-Restaurant Bestellung und/oder Bezahlung, Bezahlung und Öffnung von Parkhäusern, Öffnung von Paket-Packstationen usw.

Die benutzergesteuerte Transformation zur Schlüsselerzeugung kann wie gesagt auf einem Touchdisplay ausgeführt werden. Eingesetzt werden kann dabei ein Gerät, wie einem intelligenten tragbaren Gerät (Smart Phone, Notebook, Tablet), einem festen Terminal (PC), in einem Fahrzeug über ein dediziertes HMI (Mensch-Maschine-Interface), ein Unterhaltungssystem, ein Display mit Touchscreen oder mit Gestenerkennung, und dem Fahrer oder Insassen ermöglicht, eine statische 2D/3D-Bildsignatur (d.h. ein Muster) zu definieren oder eine Sequenz von 2D/3D-Bildsignaturen (d.h. Filmsignaturen) zu definieren. Die Bildsignaturen bestehen z.B. aus einem oder einer Folge von X,Y, (Z)-Wolkenpunkten für jeweils eine statische Bildsignatur oder eine Filmsignatur.
Die visuelle Signatur (Schlüssel) kann als 2D/3D-Wolkenpunkt oder als Folge von Wolkenpunkten gespeichert werden.

Der Schlüssel bzw. die Signatur kann in einem Speicher dauerhaft abgelegt werden, um den Upload auf ein externes System zu ermöglichen. Beispielsweise könnte der Benutzer seine Bildsignatur auf einem USB-Stick oder dem Speicher seines Smartphones speichern und in das Fahrzeug laden. Alternativ könnte der Schlüssel auch direkt im Fahrzeug gespeichert werden und optional gleich mit einer Fahrzeugidentifikation gepaart werden.

Der Erfindungsgedanke liegt auch darin, den Verschlüsselungscode und das Authentifizierungsmuster in Anweisungen für die Scheinwerfersteuerung umzuwandeln.

In einer möglichen, einfachen Implementierung würde der Steuerungsalgorithmus für einen LED-Matrix-Scheinwerfer einen Nx1-Bit-Verschlüsselungsschlüssel in eine NxP-Matrix mit einer 1xP-Transformation übersetzen. Jede Zelle der NxP-Matrix erlaubt die Steuerung der Intensität einer der NxP-LEDs des Scheinwerfers und kann 1 oder 0 enthalten. In diesem Fall wäre es sinnvoll, eine Länge N für den Verschlüsselungsschlüssel zu wählen, die mit einer Dimension der LED-Matrix des Scheinwerfers übereinstimmt. Die 0 und 1 bedeutet nicht, dass jede LED EIN oder AUS wäre, sondern z.B. jede LED könnte mit einer ersten Intensität oder einer zweiten Intensität eingeschaltet werden. Dies würde es ermöglichen, eine visuelle Meldung zu überlagern, während die Scheinwerfer während der Nachtfahrt aktiviert werden.

Die Erzeugung des Verschlüsselungsschlüssels kann in einem Modul erfolgen, dass es erlaubt, die Bildsignatur oder Filmsignatur in eine Gruppe von Bits/Bytes umzuwandeln, die als Verschlüsselungsschlüssel verwendet werden.
Dabei kann die Gruppe eine Matrix sein, die direkt von der Bildsignatur abgeleitet ist (z.B. MxN-Wolkenpunkt) oder ein eindimensionaler (z.B. Mx1) Bitverschlüsselungsschlüssel, der durch Anwendung einer Matrix-Transformation auf die Bildsignatur erhalten wird (z.B. eine Nx1-Transformation). In diesem Fall, könnte der Schlüssel ein SSL-Schlüssel sein. Der Schlüssel kann auch eine Folge von mehreren Schlüsseln im Falle einer Filmsignatur sein.

Die Erzeugung von Authentifizierungsmustern kann als eine Erweiterung des Verschlüsselungsschlüssels für den Fall, dass sich das Fahrzeug bei einer Infrastruktur authentifizieren muss oder will, verwendet werden.
In diesem Fall würde der Schüssel (Encryption Key) mit einem weiteren Identifikationscode, typischerweise Tx1 Bitfolge, zusammengeführt werden. Dies könnte sein:
- eine Kennung des Fahrzeugs (z.B. Kennzeichen, Fahrgestellnummer usw.);
- Kennung eines Bankgeschäfts oder anderes Vorgangs;
- Kennung einer Fahrberechtigung (z.B. zum Parken an einem bestimmten Ort etc.);

Die Authentifizierungsmustergenerierung kann auf verschiedene Arten erfolgen:
- Anhängen des Identifikationscodes an den Schlüssel;
- Vektorprodukt (oder andere mathematische geeignete Transformation) des Identifikationscodes mit dem Schlüssel;
- Bit-Füllung, Einfügen des Identifikationscodes bitweise zwischen den Bits des Verschlüsselungsschlüssels;

Auch ermöglicht die Erfindung eine Backup-Datenübertragung zu der sonst üblichen Funkübertragung für V2I Kommunikation. So kann die Übertragung bestimmter Informationen über den Zustand des Fahrzeugs und die Absicht des Fahrzeugs, die normalerweise über V2I Funkkommunikation liefe, mit Hilfe der Matrix der Scheinwerfer übertragen werden. Dies kann aus Gründen der Datenredundanz oder in Notsituationen, wie wenn eine kritische Antriebssituation vorliegt, oder das V2I System beschädigt oder teilweise beschädigt ist, erfolgen. In diesem Modus kann also über den Scheinwerfer-Kommunikationskanal Informationen über den Fahrzeugzustand zu Zwecken der Datenredundanz, bei einem Notfall, einer Datensicherung bei V2I-Ausfall oder Teilausfall oder einer kritischen Antriebssituation erfolgen.

Die Betriebsart ist dann ähnlich wie bei der Übertragung des Verschlüsselungsschlüssels oder Authentifizierungsschlüssels. Die Fahrzeugzustandsinformationen können in Scheinwerferbefehle umgewandelt und über die Scheinwerfer ausgestrahlt werden.

Nach der Erfindung können Abfragen gesendet und empfangen werden, um eine verschlüsselte Datenkommunikation mit umliegenden Fahrzeugen oder Infrastrukturen aufzubauen. Diese Anforderung kann über V2I gesendet werden, und wenn eine Anforderung gesendet oder empfangen wird, kann das System den Verschlüsselungsschlüssel über die Lichtmodulation aussenden. Dieser Prozess kann periodisch stattfinden.

Alternativ kann regelmäßig der Verschlüsselungsschlüssel über die Scheinwerfer ausgesendet und die Kommunikation immer verschlüsselt werden.

Alternativ kann eine Verschlüsselung der Kommunikation in einer bestimmten Umgebungssituation (z.B. dichter Datenverkehr oder dichte Bebauung) oder einem bestimmten Bereich, in dem das Risiko eines Cyber-Angriffs höher wäre, ausgeführt werden.

Datenverschlüsselungsschlüssel können wie erwähnt von geeigneten optischen Sensoren aufgefangen und gelesen werden.

Die vom Fahrzeug gesendeten Daten werden erfindungsgemäß mit dem Verschlüsselungsschlüssel verschlüsselt, der aus der benutzergesteuerten Transformation generiert wird. Umgebende Fahrzeuge oder Infrastruktur, die in der Lage sind, den Schlüssel zu empfangen und zu lesen, können die Daten decodieren und verwerten. Umgekehrt kann das Fahrzeug mit Hilfe der Scheinwerfer mehrere fremde Verschlüsselungsschlüssel aufzeichnen und versuchen, die gesamte eingehende V2I-Kommunikation mit der Liste der verfügbaren Verschlüsselungsschlüssel zu entschlüsseln.

Zudem ist es denkbar, in speziellen Antriebssituationen den Authentifizierungsbetrieb, also das Verschlüsseln zu aktivieren.

Dieser Modus kann z.B. folgende Teilschritte umfassen:
Eine Situation, in der eine Authentifizierung als erforderlich erkannt wird, z.B. durch Infrastrukturanforderung, GPS-Daten etc., tritt auf.
In einigen Fällen wird ein spezieller Identifikator oder Enabler für die Authentifizierung angefordert. In diesem Fall gibt die Infrastruktur eine erste Kennung aus. Ist dies nicht der Fall, kann direkt ein Authentifizierungscode erzeugt werden (siehe unten).
Das Fahrzeug erhält die Authentifizierungsanfrage und optional die erste Kennung für eine bestimmte Transaktion (z.B. Zahlung). Das Fahrzeug löst die Transaktion aus.
Die Transaktionsplattformen senden eine zweite Kennung an das Fahrzeug und die Infrastruktur zurück.
Nun wird einen Authentifizierungscode unter Verwendung des Verschlüsselungsschlüssels und entweder einer zweiten Kennung oder einer fahrer- oder fahrzeugspezifischen Kennung (Ausweis, Kennzeichen etc.) erzeugt.
Der Authentifizierungscode wird daraufhin an die Infrastruktur gesendet, die den Dienst freischalten kann (z.B. kann der Authentifizierungscode in der Infrastruktur vorab gespeichert oder von der Infrastruktur auf ähnliche Weise wie im Fahrzeug verarbeitet werden, indem der zweite Identifikator verwendet wird).

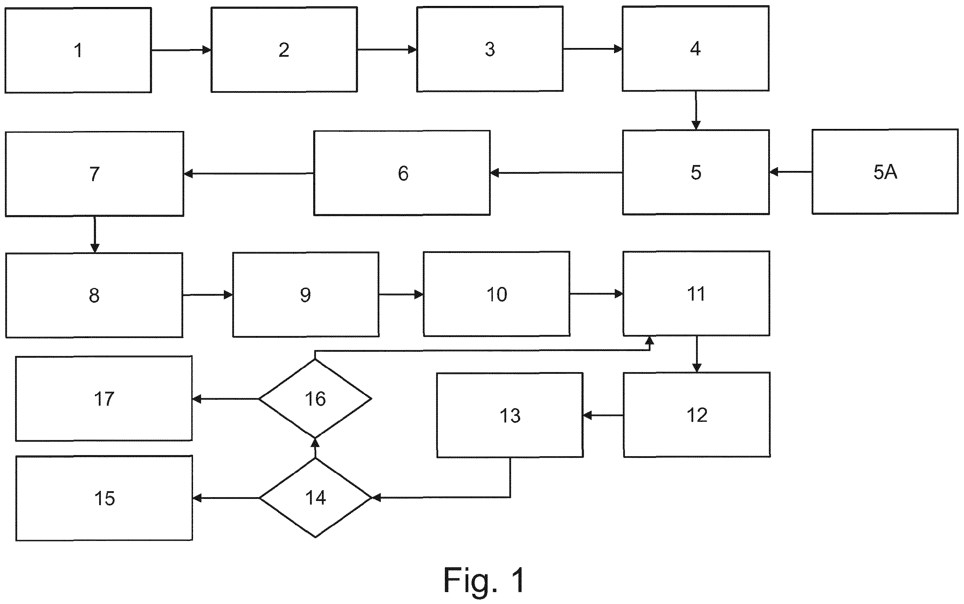

Weitere Details der Erfindung ergeben sich aus der nachfolgenden Beschreibung von Ausführungsbeispielen anhand der Zeichnung, in der
- Fig. 1: ein Flussdiagramm der Interaktion zwischen Fahrzeug und Infrastruktur nach der Erfindung gezeigt ist.

In der Figur 1 ist insgesamt ein Verfahren zum verschlüsselten Austausch von Daten zwischen einem Fahrzeug und einer Infrastruktur unter Verwendung von Scheinwerferlicht des Fahrzeugs erläutert. Dabei werden die Daten verschlüsselt und auf das Scheinwerferlicht aufmoduliert, um den Benutzer und das Fahrzeug zu identifizieren, wobei der Schlüssel zur Verschlüsselung der Daten durch benutzergesteuerte Transformation erzeugt wird.

Konkret beschreibt es die Interaktion zwischen einen PKW und einer Infrastruktur in Gestalt einer Autobahn-Schranke, um die Schrank nach Tätigung einer Bezahlung zu öffnen.

In dem Beispiel erfolgt jegliche Kommunikationen mittels Lichtsignal-Übertragung über Fahrzeugscheinwerfer und Lichtsensoren der jeweiligen Infrastruktur bzw. über Lichtsignale von der Infrastruktur und Lichtsensoren am Fahrzeug. Alternativ könnte auch eine drahtlose Funkübertragung eingesetzt werden für die Infrastruktur zu Fahrzeug Kommunikation.

In dem vorliegenden Beispiel wird eine 2D Bildsignatur des Fahrers angefordert, um den Verschlüsselungsschlüssel des PKW (Encryption Key des Fahrzeugs, (EKV)) zu generieren.

Die 2D Bildsignatur wird durch den Fahrer derart erzeugt, in-dem dieser auf einem Touchdisplay, auf dem ein Bild angezeigt wird, "herummalt" und so eine Bildsignatur als einen ersten Satz von Daten oder Bits erzeugt.

In dem Beispiel ist ein sog. "Handshake" Verfahren beschrieben, in dem die Infrastruktur und das Fahrzeug zunächst ihre Schlüssel austauschen (ihre Encryption keys). Der Vorteil der Methode ist, dass die Schüssel bei jeder Kommunikation gewechselt werden können z.B., durch die Benutzung einer unterschiedlichen 2D Bildsignatur.
Dies erhöht die Sicherheit gegen ein Ausspähen.

Das Verfahren läuft wie folgt ab.

Der PKW fährt auf der Autobahn und nähert sich einer Mautschranke. Die Mautschranke erkennt dies (1) und sendet daraufhin einerseits seinen eigenen Schlüssel und eine Nachfrage nach dem PKW Schlüssel aus (2).

Der PKW prüft (3) den Schlüssel der Mautschranke über drahtlos Verbindung im Internet und bei positiver Überprüfung wird der Schlüssel der Mautschranke im PKW gespeichert und für die weitere Kommunikationsentschlüsselung im PKW gespeichert (4).

Anschließend sendet der PKW seinen Schlüssel über die Scheinwerfermodulation aus (5). Der Schlüssel ist zuvor vom Fahrer durch Aufmalen eines Musters auf einem auf dem Touchdisplay des PKW gezeigten Bildes erzeugt worden (5A).

Die Mautschranke empfängt und speichert temporär den Schlüssel des PKW (6) und verwendet diesen nachfolgend zur Entschlüsselung der Kommunikation mit dem PKW.

Die Mautschranke sendet daraufhin eine verschlüsselte Anforderung an den PKW einen Nachweis der gezahlten Maut zu übersenden, die der PKW nun entschlüsseln kann (7).

Der PKW kontaktiert über drahtlos Verbindung im Internet eine Bank (8), um die Zahlung auszuführen, wobei der PKW seinen Schlüssel (von oben) zur Autorisation übermittelt (9).

Die Bank führt daraufhin die Überweisung aus (10) und übermittelt als Bestätigung einen Transaktionscode.

Der PKW generiert (11) aus seinem Schlüssel und dem Transaktionscode eine Antwort auf die Zahlungsaufforderung aus (7) und sendet diesen so verschlüsselt über die Scheinwerfer an die Mautschranke (12).

Die Mautschranke extrahiert den Transaktionscode und überprüft diesen über drahtlos Verbindung im Internet bei der Bank (13).

Wenn der Transaktionscode gültig ist (14), öffnet sich die Schranke (15).

Ist der Transaktionscode ungültig (16), wird eine Übertragungsstörung geprüft (Abstand zu groß etc.). Liegt eine Störung vor, wird das Fahrzeug zur erneuten Übertragung aufgefordert (Rücksprung nach 11).

Liegt keine Störung vor, wird dem PKW angezeigt, dass nur eine manuelle Mautschrankenabfertigung in Frage kommt, so dass der PKW umplatziert werden muss.

## Patentansprüche

1. Verfahren zum verschlüsselten Austausch von Daten zwischen einem Fahrzeug und einer Infrastruktur oder einem weiteren Fahrzeug unter Verwendung von Scheinwerferlicht des Fahrzeugs, wobei die Daten verschlüsselt und auf das Scheinwerferlicht aufmoduliert werden, um den Benutzer und/oder das Fahrzeug zu identifizieren, wobei der Schlüssel zur Verschlüsselung der Daten durch benutzergesteuerte Transformation erzeugt wird, **dadurch gekennzeichnet, dass**
die benutzergesteuerte Transformation auf einem Touchdisplay stattfindet, indem der Benutzter auf diesem malt oder mit dem Finger Zufallsbewegungen ausführt.

2. Verfahren nach Anspruch 1, **dadurch gekennzeichnet, dass** die benutzergesteuerte Transformation eine Bild- oder Videotransformation umfasst.

3. Verfahren nach Anspruch 1 oder 2, **dadurch gekennzeichnet, dass** als Scheinwerferlicht Matrix-Scheinwerferlicht, insbesondere Matrix-LED- oder Matrix-Laser-Scheinwerferlicht verwendet wird.

4. Verfahren nach einem der vorhergehenden Ansprüche, **dadurch gekennzeichnet, dass** der Schlüssel periodisch und/oder auf Anfrage mit der Infrastruktur oder dem weiteren Fahrzeug ausgetauscht wird.

5. Verfahren nach einem der vorhergehenden Ansprüche 2 bis 4, **dadurch gekennzeichnet, dass** das Malen oder die Zufallsbewegungen mit dem Finger des Benutzers in einem Bild als Übertragungsmedium als Pinselstriche angezeigt werden.

6. Verfahren nach einem der vorhergehenden Ansprüche, **dadurch gekennzeichnet, dass** die Daten zusätzlich einen Identifizierungscode für das Fahrzeug und/oder den Benutzer und/oder einen Vorgang aufweisen.

## Claims

1. Method for the encrypted exchange of data between a vehicle and an infrastructure or a further vehicle using headlamp light of the vehicle, wherein the data are encrypted and modulated onto the headlamp light in order to identify the user and/or the vehicle, wherein the key for encrypting the data is generated by user-controlled transformation, **characterized in that** the user-controlled transformation takes place on a touch display by way of the user drawing on the latter or performing random movements with the finger.

2. Method according to Claim 1, **characterized in that** the user-controlled transformation comprises an image or video transformation.

3. Method according to Claim 1 or 2, **characterized in that** matrix headlamp light, in particular matrix LED headlamp light or matrix laser headlamp light, is used as headlamp light.

4. Method according to one of the preceding claims, **characterized in that** the key is exchanged with the infrastructure or with the further vehicle periodically and/or upon request.

5. Method according to one of the preceding Claims 2 to 4, **characterized in that** the drawing or the random movements with the finger of the user is/are displayed in an image as transfer medium in the form of brush strokes.

6. Method according to one of the preceding claims, **characterized in that** the data additionally have an identification code for the vehicle and/or the user and/or a procedure.

## Revendications

1. Procédé pour l'échange de données crypté entre un véhicule et une infrastructure ou un autre véhicule, utilisant la lumière des phares du véhicule, les données étant cryptées et modulées sur la lumière des phares afin d'identifier l'utilisateur et/ou le véhicule, la clé de cryptage des données étant générée par une transformation commandée par l'utilisateur, **caractérisé en ce que** la transformation commandée par l'utilisateur est produite sur un affichage tactile par le fait que l'utilisateur peint ou effectue sur celui-ci des mouvements aléatoires avec le doigt.

2. Procédé selon la revendication 1, **caractérisé en ce que** la transformation commandée par l'utilisateur comprend une transformation d'images ou vidéo.

3. Procédé selon la revendication 1 ou 2, **caractérisé en ce que** l'on utilise en tant que lumière des phares une lumière de phare à matrice, en particulier une lumière de phare à matrice à LED ou à matrice à laser.

4. Procédé selon l'une quelconque des revendications précédentes, **caractérisé en ce que** la clé est échangée périodiquement et/ou sur demande avec l'infrastructure ou l'autre véhicule.

5. Procédé selon l'une quelconque des revendications précédentes 2 à 4, **caractérisé en ce que** la peinture ou les mouvements aléatoires avec le doigt de l'utilisateur sont indiqués dans une image en tant que support de transfert sous forme de traits de pinceau.

6. Procédé selon l'une quelconque des revendications précédentes, **caractérisé en ce que** les données présentent en outre un code d'identification pour le véhicule et/ou l'utilisateur et/ou une opération.
